# EUROPÄISCHE PATENTSCHRIFT

(11) **EP 2 583 815 B1**
(45) Veröffentlichungstag und Bekanntmachung des Hinweises auf die Patenterteilung: **14.10.2015**
(21) Anmeldenummer: 12189028.9
(22) Anmeldetag: 18.10.2012
(51) Int. Cl.: B29C 70/86, B60G 21/055, B29C 33/50, B29C 70/48

(54) **Stabilisator in Faserkunststoffverbund und Verfahren zu dessen Herstellung**
Stabilizer in fibre reinforced plastic composite and method for its production
Stabilisateur en composite renforcé en fibres et son procédé de fabrication

(30) Priorität: 21.10.2011 DE 102011085029
(43) Veröffentlichungstag der Anmeldung: 24.04.2013
(73) Patentinhaber: Luhn & Pulvermacher - Dittmann & Neuhaus GmbH, 58135 Hagen (DE)
(72) Erfinder: Renner, Ole, 01099 Dresden (DE); Krahl, Michael, 01219 Dresden (DE); Lepper, Dr. Martin, 01279 Dresden (DE); Hufenbach, Prof. Dr. Werner, 01324 Dresden (DE)
(74) Vertreter: Kailuweit & Uhlemann Patentanwälte Partnerschaft mbB

(56) Entgegenhaltungen:
- EP-A1- 0 391 222
- DE-A1- 4 037 672
- DE-A1-102010 045 301
- US-A- 4 292 101

## Beschreibung

Die Erfindung betrifft einen Stabilisator in Verbundbauweise aus faserverstärktem Kunststoff sowie ein Verfahren zu dessen Herstellung.

Stabilisatoren dienen im Fahrzeugbau der Kopplung der Federbewegung gegenüberliegender Räder, insbesondere bei Kurvenfahrten, um so Wankbewegungen zu verhindern. Sie bilden eine Verbindung zwischen den gegenüberliegenden Radaufhängungen einer Achse, deren Mittelteil drehbar an der Karosserie bzw. dem Unterboden des Fahrzeugs angebracht ist. Die Anbindung der Radaufhängungen erfolgt, zumeist mittels Gummielementen, an von diesem Mittelteil abgewinkelten hebelartigen Endstücken.

Kommt es, bspw. bei einer Kurvenfahrt oder durch Straßenunebenheiten, zum Einfedern nur eines der Räder einer Achse, verdreht sich der Stabilisator derart, dass auch das andere Rad angehoben wird. Federt das stärker belastete Rad nach der Kurve oder Unebenheit wieder aus, senkt sich auch das gegenüberliegende Rad. Die dazu nötige Kraftübertragung erfolgt durch eine Torsion des Mittelteils des Stabilisators sowie durch eine Biegung und Torsion der abgewinkelten Endstücke. Zusätzlich hat der Stabilisator eine dämpfende Funktion, um ein Aufschaukeln des Fahrzeugs bei einseitigem Einfedern zu verhindern.

Werden diese Stabilisatoren darüber hinaus zur Rad- oder Achsführung genutzt, werden sie auch Führungsstabilisatoren oder Stabilenker genannt.

Da auf einen Stabilisator extreme mechanische Beanspruchungen einwirken können, werden bislang vorrangig reine Metallkonstruktionen verwendet. Bei der Herstellung dieser, zumeist aus einem Stück Federstahl gefertigten, Stabilisatoren werden zunächst Stahlstangen oder -rohre in die gewünschte Zielgeometrie kalt oder warmumgeformt. In zusätzlichen Arbeitsschritten werden Lasteinleitungsmittel, bspw. zur Befestigung des Stabilisators am Unterboden, sowie die Anbindungen an die Radaufhängung an den Stabilisatorrohling angefügt oder aus diesem heraus gearbeitet. Ebenfalls bekannt ist die Herstellung von Stabilisatoren in gebauter Ausführung, wobei Mittelteil und Endstücke separat hergestellt und durch stoff- , reib- oder formschlüssige Verbindung gefügt werden.

Stabilisatoren aus Metall sind zum einen sehr schwer und, besonders wenn rohrförmig ausgestaltet, anfällig für Brüche. Daher wurden bereits in der Vergangenheit Stabilisatorkonstruktionen aus faserverstärktem Kunststoff vorgeschlagen.

Die DE 3 612 777 A1 beschreibt eine Aufhängung für Kraftfahrzeuge, aufweisend einen Stabilisator, der zumindest teilweise aus Faserverbundwerkstoff besteht. Die abgewinkelten Enden des Stabilisators sind aus Metall gebildet und werden, wie auch die Lageraugen zur Anbringung von Krafteinleitungselementen, bereits beim Wickeln der Stabilisatorform in diese eingefügt. Der Stabilisator wird hergestellt, indem auf einen geformten ausgehärteten Faserverbund-Gewebeschlauch weitere Gewebeschläuche aufgezogen oder Fasern gewickelt werden. Dieser Herstellungsprozess ist nachteilig sehr aufwendig, da der eigentliche Faseraufbau nach der Umformung des Stabilisators erfolgt und somit der Einsatz komplizierterer Faserablagetechniken, bspw. Flechten oder Wickeln, mit dem stabilere Faserverbundstrukturen erzeugt werden können, nicht möglich ist. Der Stabilisator besteht daher nachteilig aus einer Vielzahl aneinandergefügter Gewebeschläuche oder ist diskontinuierlich gewickelt, woraus nachteilige Diskontinuitäten des Faserverlaufs resultieren, die einer optimalen Kraftein- und -ableitung entgegenstehen.

Die JP 57022017 beschreibt ein Verfahren zur Herstellung einer Vielzahl von Stabilisatoren aus faserverstärktem Kunststoff in einem Arbeitsgang. Dabei wird ein mit Kunststoff getränktes Fasermaterial um einen Grundkörper gewickelt, wobei dieser Grundkörper der Form des angestrebten Stabilisators entspricht. Dabei kommt es aufgrund der gebogenen Geometrie des Grundkörpers sowie der Wickelung der Fasern zu Ausdünnungen und ungünstigen Faserverläufen, insbesondere an Biegestellen. Um diesen Grundkörper wird nachfolgend eine Form gelegt und erwärmt. Gleichzeitig wird der in der Form befindliche Schlauch unter Druck gesetzt und in die erhitzte Form hinein gepresst. Durch die Hitze bilden Kunststoff und Fasern einen festen Verbund und fixieren die Stabilisatoren in der gewünschten Form, die nach dem Aushärten bzw. Abkühlen des Matrixmaterials vereinzelt werden können. Da der entstehende Verbundkörper am Ende in mehrere Stabilisatoren vereinzelt wird, kann die Anbringung von Lasteinleitungs- zw. Anbindungselementen nachteilig erst im Nachhinein erfolgen.

Die EP 0 391 222 offenbart einen Stabilisator gemäß dem Oberbegriff des Anspruchs 1.

Die Aufgabe der Erfindung ist, die Nachteile des Standes der Technik zu überwinden und ein Stabilisator zur Verwendung in Land- und Schienenfahrzeugen aus Faserverbundwerkstoff in einer einteiligen Konstruktion ohne Faserunterbrechung vorzuschlagen. Dieser Stabilisator soll eine möglichst hohe Steifigkeit und Festigkeit bei möglichst geringem Gewicht sowie belastungsangepasste und verbesserte Dämpfungseigenschaften aufweisen. Darüber hinaus soll ein Verfahren zur einfachen und kostengünstigen Herstellung eines solchen Stabilisators vorgeschlagen werden.

Erfindungsgemäß wird die Aufgabe gelöst durch einen Stabilisator mit den Merkmalen des Anspruchs 1 und einem Verfahren zu seiner Herstellung gemäß Anspruch 6.

Vorzugsweise Weiterbildungen sind in rückbezogenen Unteransprüchen dargelegt.

Der erfindungsgemäße Stabilisator besteht aus einem Faserverbundwerkstoff, insbesondere aus Glasfaser-, Aramid- oder Kohlefasern die in einem duro- oder thermoplastischen Matrixwerkstoff eingebettet sind. Um eine bessere Kraftleitung zu gewährleisten und zur Minimierung der Bruchgefahr ist der Stabilisator einteilig und ohne Faserunterbrechung konstruiert. Seiner Verwendung entsprechend unterteilt sich der Stabilisator in einen überwiegend geraden Mittelteil, wobei die exakte Form durch das auszurüstende Fahrzeug definiert ist. An diesem Mittelteil befinden sich beidseitig abgewinkelte Endstücke mit Elementen zur Anbindung an die Radaufhängung. Des Weiteren sind an dem erfindungsgemäßen Stabilisator Lasteinleitungselemente zur Verbindung des Stabilisators mit dem Fahrzeug vorgesehen. Im Sinne dieser Anmeldung bezeichnen Anbindungselemente alle Elemente, die zur Verbindung von Stabilisator und Rahaufhängung vorgesehen sind. Mit Lasteinleitungselementen sind alle üblichen Elemente, die dem Anschluss bzw. der Verbindung des Stabilisators mit dem Fahrzeug bzw. der Karosserie dienen, bezeichnet.

Die Geometrie, insbesondere die Querschnittgeometrie, des Stabilisators ist dabei auf der gesamten Länge den zu erwartenden Belastungen sowie dem zur Verfügung stehenden Bauraum angepasst. Darüber hinaus sind der Wandstärkenverlauf des Verbundmaterials sowie der Faserverlauf in axialer und radialer Richtung den zu erwartenden Belastungen des Stabilisators angepasst. Im Sinne dieser Anmeldung bezeichnet die radiale Richtung die Summe der durch die Oberflächennormalen des Querschnitts gegebenen Richtungen.

Die Anpassung der Querschnittgeometrie an die zu erwartenden Belastung umfasst dabei insbesondere die Anpassung an die bei Belastungen auftretenden Spannungen im Material. Die Querschnittgeometrie umfasst im Sinne dieser Anmeldung sowohl die Querschnittform, bspw. kreisrund, oval, oder rechteckig, als auch die Querschnittsgröße, bspw. den Durchmesser bzw. die Ausdehnung in radialer Richtung.

Aufgrund der verschiedenen Belastung von verschiedenen Teilen des Stabilisators, unterscheidet sich die Querschnittform insbesondere zwischen dem Mittelstück und den abgewinkelten Endstücken desselben. Der hauptsächlich torsionsbeanspruchte Mittelteil weist bevorzugt eine weitestgehend kreisförmige Querschnittform auf, für die hauptsächlich biegebeanspruchten Endstücke werden hingegen ovale oder andere Querschnittformen bevorzugt.

Bei der annähernd kreisrunden Querschnittform des Mittelstücks erfolgt die Anpassung des Stabilisators an die zu erwartende Torsionsbeanspruchung vorrangig über die Anpassung des Durchmessers, der Wandstärke und der Faserorientierung. Die Wandstärke kann dabei auch entlang des Umfangs des Stabilisators variieren. Zusätzlich erfolgt eine Anpassung von Durchmesser und Wandstärke des Stabilisators bevorzugt an Stellen zur Anbringung von Lasteinleitungselementen.

Bei den abgewinkelten Endstücken erfolgt die Anpassung der Querschnittgeometrie des Stabilisators an die zu erwartende Biegebeanspruchung über die Anpassung von Querschnittform, Wandstärke und Faserorientierung. Dadurch können die Reaktionen des Stabilisators auf bestimmte zu erwartende Biegebeanspruchungen sowie dessen Dämpfungseigenschaften gezielt eingestellt werden. Die abgewinkelten Endstücke weisen dabei bevorzugt von der Kreisform abweichende Querschnitte, bspw. ovale oder annähernd rechteckige Querschnitte, mit zu der Richtung der zu erwartenden Krafteinwirkung parallelen langen Halbachsen auf.

Bevorzugt ist die Schaffung von speziellen Biegebereichen, durch deren plastische Verformung die auf den Stabilisator wirkenden Biegebeanspruchungen gezielt kompensiert werden. Über eine Anpassung der Querschnittgeometrie, bspw. durch eine Verringerung der Wandstärke, wird dabei die Duktilität stark biegebeanspruchter Bereiche erhöht. Durch eine gezielte Einstellung des Wandstärkenverlaufs in der Umgebung dieser Biegebereiche können langzeitbeständige Stabilisatoren konstruiert werden, deren Reaktion auf Biegebeanspruchungen gezielt einstellbar ist.

Die gebogenen Übergangsbereiche zwischen den abgewinkelten Endstücken und dem Mittelstück des Stabilisators sind kombinierten Biege- und Torsionsbeanspruchungen ausgesetzt. Die Anpassung der Querschnittgeometrie an diese Beanspruchungen sowie an die daraus resultierenden Scherkräfte erfolgt vorrangig über die Anpassung der Querschnittform und der Wandstärke.

Die Querschnittform des erfindungsgemäßen Stabilisators ist, neben der Berücksichtigung des zur Verfügung stehenden Bauraums sowie den zu erwartenden Belastungen, an weitere funktionelle Aspekte angepasst. Die Elemente zur Anbindung der Radaufhängung an den Enden der abgewinkelten Endstücke weisen bevorzugt spezielle, ihrer Funktion angepasste Querschnittformen auf. Besonders bevorzugt sind diese Elemente bei U-förmigen Stabilisatoren in Form einer Abflachung und Querbohrung und bei C-förmigen Stabilisatoren zapfenförmig ausgestaltet.

Weiterhin erfolgt eine Anpassung der Querschnittgeometrie des Stabilisators an Stellen zur Anbringung von Lasteinleitungselementen bzw. zur Einbringung metallischer Lagerelemente unter Berücksichtigung der an dieser Stelle zu erwartenden Beanspruchung. Derartige Anpassungen werden insbesondere durch Anpassungen der Wandstärke des Stabilisators vorgenommen.

In einer bevorzugten Ausführungsform des Stabilisators sind Querschnittverengungen an Krafteinleitungspunkten, insbesondere an Punkten an denen die Befestigung des Stabilisators am Fahrzeug mittels Lasteinleitungselementen erfolgt, vorgesehen. Mittels dieser Abstufungen im Außendurchmesser des Stabilisators können die Lasteinleitungsmittel auch ohne Klebstoffeinsatz sicher in ihrer Position gehalten werden.

Die Anpassung des erfindungsgemäßen Stabilisators an die zu erwartenden Belastungen erfolgt zudem bevorzugt über eine Einstellung des Faserverlaufs im Faserverbundwerkstoff. Während der flecht- oder wicklungstechnischen Ablage der Fasern erfolgt deren gezielte Ausrichtung sowohl axial als auch in radialer Richtung.

Bevorzugt werden hauptsächlich torsionsbeanspruchte Bereiche des Stabilisators, insbesondere der Mittelteil, mit Fasern verstärkt, die in einem Winkel von zwischen +/- 35° und +/- 55°, bevorzugt von zwischen +/- 40° und +/- 50°, besonders bevorzugt von +/- 45° zur Längsachse der Faserlagenorientiert sind.

Weiterhin bevorzugt werden hauptsächlich biegebeanspruchte Bereiche des Stabilisators, insbesondere die abgewinkelten Endstücke, mit Fasern verstärkt, die in einem Winkel von zwischen +/- 20° und +/- 40°, bevorzugt von zwischen +/- 25° und +/-35°, besonders bevorzugt von +/- 30° zur Längsachse der Faserlagen orientiert sind.

Gebogene Bereiche des Stabilisators, insbesondere die Übergangsbereiche zwischen dem Mittelteil und den Endstücken, weisen einen belastungsangepassten Faserverlauf auf, um auch Scherkräfte ableiten zu können. Dabei findet ein Übergang zwischen der Faserorientierung der angrenzenden biege- oder torsionsbeanspruchten Gebiete statt. Darüber hinaus weisen die kombiniert belasteten Bereiche einen belastungsorientierten mehrlagigen Laminataufbau auf, wobei die Faserorientierung der einzelnen Lagen voneinander abweichen kann.

Während der flecht- oder wicklungstechnischen Ablage der Fasern ist nicht nur deren Orientierung, sondern auch die Dicke des resultierenden Gewebes gezielt einstellbar. Somit ist die Wandstärke des Stabilisators, insbesondere in definierten Belastungsbereichen, den zu erwartenden Belastungen angepasst, wobei je nach Art der Belastung, durch verstärkte oder verminderte Faserablage, eine höhere oder niedrigere Wandstärke eingestellt wird.

Zusätzlich zu der Anpassung der Wandstärke durch eine gezielte Faserablage während des Flecht- bzw. Wickelvorgangs ist das Einbringen von textilen Einlegern an definierten Belastungsbereichen bevorzugt. Durch die Unabhängigkeit der textilen Einleger vom Faserverlauf im Faserverbundwerkstoff kann so zusätzlich eine belastungsangepasste Krafteinleitung in den Stabilisator realisiert werden.

In einer ebenfalls bevorzugten Ausführungsform erfolgt eine Anpassung der Fasern, bzw. deren Filamentzahl an die zu erwartenden Belastungen des Stabilisators. So können Fasern mit unterschiedlicher Filamentzahl, bspw. 3k, 6k, 12k oder 24k verwendet werden. Die Verwendung verschieden starker Fasern in einem einzigen Bauteil ist ebenfalls denkbar.

Die Anpassung der Wandstärke erfolgt dabei bevorzugt in Biegebereichen des Stabilisators sowie an Positionen an denen später Lasteinleitungselemente mit dem Stabilisator verbunden werden sollen.

In einer weiteren bevorzugten Ausführungsform weist der Stabilisator Lasteinleitungs- und/oder Anbindungselemente auf, die ganz oder teilweise aus Faserverbundwerkstoff und ohne Faserunterbrechung an den Stabilisator angefügt sind. Diese Lasteinleitungselemente werden bereits bei der Faserablage, bspw. durch einen speziell geformten Kern, ausgebildet und bilden somit einen festen Verbund mit dem restlichen Stabilisator. Zur Befestigung des Stabilisators mittels der Lasteinleitungs- bzw. Anbindungselemente an der Karosserie bzw. der Radaufhängung weisen die aus Faserverbundwerkstoff gebildeten Elemente Befestigungsmittel, bspw. innenliegende Gewinde für Schraubverbindungen, auf. Diese Befestigungsmittel sind bspw. als separate Bauteile stoff- und/oder formschlüssig in den Faserverbund eingefügt, bspw. eingeflochten.

Aus Faserverbundwerkstoff bestehende und ohne Faserunterbrechung an den Stabilisator angefügte Anbindungselemente an die Radaufhängung sind bei U-förmigen Stabilisatoren bevorzugt in Form abgeflachter und mit einem Bolzenloch versehener Enden und bei C-förmigen Stabilisatoren bevorzugt als Zapfen ausgebildet.

Weiterhin bevorzugt ist ein Stabilisator mit stoff- und/oder formschlüssig eingefügten Lasteinleitungs- bzw. Anbindungselementen. Zur Herstellung fester Verbindungen von Stabilisator und Karosserie bzw. Radaufhängung sind bevorzugt metallische Lagerelemente stoff- und/oder formschlüssig in den Stabilisator eingefügt, bspw. eingeflochten oder eingewickelt.

Sind die Anbindungen an die Radaufhängung als separate Bauteile ausgebildet, sind diese Bauteile bevorzugt in den Verbundwerkstoff des Stabilisators eingefügt, bspw. eingeflochten, oder an den beidseitig abgewinkelten Endstücken sind bevorzugt Schnittstellen zur kraft- oder formschlüssigen Anfügung dieser Bauteile vorgesehen. Diese Schnittstellen, bspw. metallische Lagerelemente, sind dann wiederum stoff- und/oder formschlüssig in den Verbund des Stabilisators eingefügt, bspw. eingeflochten oder eingewickelt.

Sind die Lasteinleitungselemente als separate Bauteile, bspw. als Schellen, ausgebildet, ist weiterhin die formschlüssige Verbindung dieser Bauteile mit dem Stabilisator, bspw. durch Querschnittsverengungen, bevorzugt. Derartige Verengungen sorgen bei dem Beispiel der als Schellen ausgebildeten Lasteinleitungselemente für eine sichere Fixierung in axialer Richtung, die ein seitliches Verrutschen des Stabilisators verhindern.

Die Herstellung eines erfindungsgemäßen Stabilisators beginnt mit der Ablage der Fasern auf einem Kern, der bevorzugt gerade und elastisch ist. Dabei kommen erfindungsgemäß bevorzugt Flecht-, oder Wickelverfahren zum Einsatz, die allgemein bekannt sind. In einer bevorzugten Ausführungsform erfolgt dabei der Vorschub des Kerns durch eine Vorrichtung, umfassend eine Vielzahl von Fadenführungsaugen. Durch diese werden ein oder mehrere Fäden auf dem rotierenden Kern abgelegt. Durch den Vorschub und die Drehgeschwindigkeit des Kerns wird der Ablagewinkel der Fäden genau definiert.

In einer bevorzugten Ausführungsform des Verfahrens wird ein konturierter Kern verwendet. In Abhängigkeit von der speziellen Kontur des Kerns erfolgt so die erste Anpassung der Querschnittgeometrie des Stabilisators. Beispielsweise sind Querschnittverengungen zur späteren Montage von Lasteinleitungselementen schon am Kern vorgesehen oder die unterschiedlichen Querschnittformen von Mittelteil und Endstücken bereits angelegt.

Der durch die flecht- bzw. wickeltechnische Ablage der Fäden auf dem Kern erzeugte Vorformling wird anschließend zusammen mit dem Kern in eine gebogene Geometrie umgeformt. Dabei werden insbesondere die beiden Endstücke von dem Mittelteil des Stabilisators abgewinkelt und so dessen Geometrie als Ganzes definiert.

Nach der ersten Umformung wird der gebogene Vorformling in ein dieser Geometrie entsprechendes Um-/Urformwerkzeug, auch als RTM-Werkzeug bekannt, eingelegt, in dem die endgültige Konturierung des Stabilisators erfolgt. Dabei findet die Benetzung des Matrixwerkstoffs mit den Fasern statt. Durch das Einbringen eines Druckmittels, bspw. Luft, Öl, Wasser in den rohrförmigen Kern, werden die mit dem Matrixwerkstoff benetzten Faserlagen in Ihre Endkontur verpresst.

In einer bevorzugten Ausführungsform des Verfahrens wird der rohrförmige Vorformling mit einem expandierenden Kernmaterial, bspw. einem Schaumstoff, befüllt und dadurch mit Druck beaufschlagt. Dieser kann anschließend als verlorener Kern in der Struktur verbleiben oder nach dem Infiltrationsvorgang wieder entfernt werden.

Nach der Entnahme des Stabilisators aus dem Umformwerkzeug ist abgesehen von Nachbesserungen und der Entfernung von Gräten die Herstellung des Stabilisators abgeschlossen.

Bei der Herstellung des Stabilisators hängen die Bedingungen der Benetzung des Matrixwerkstoffs mit den Fasern von der Art des verwendeten Matrixwerkstoffes ab. Bei der Verwendung eines thermoplastischen Matrixwerkstoffs wird dieser in Form von Fäden bereits während des Flecht-/ bzw. Wickelvorgangs in die Faserlagen integriert. Um die Fasern mit dem Matrixwerkstoff zu einem Faserverbundwerkstoff zu verbinden wird während der Ausformung des Stabilisators in der geschlossenen Form eine geeignete Temperatur eingestellt. Dadurch wird der thermoplastische Matrixwerkstoff fließ fähig und durchdringt die Faserlagen. Bei der anschließenden Abkühlung der geschlossenen Form härtet der Matrixwerkstoff aus und verbindet sich mit den Fasern zu einem Faserverbundwerkstoff.

Bei der Verwendung eines thermoplastischen oder duroplastischen Matrixwerkstoffs wird dieser den Fasern in flüssiger Form zugeführt. Dazu sind in dem geschlossenen Umformwerkzeug entsprechende Einlassöffnungen für das Reaktionsharz vorgesehen. Die Zuführung des Matrixwerkstoffs erfolgt dann zeitgleich mit der Druckbeaufschlagung des Kerns. Zusätzlich muss das Ur- bzw. Umformwerkzeug geeignet temperiert werden, damit der Matrixwerkstoff seine Viskosität ausreichend verringert und die Faserlagen durchdringt. Während des Abkühlens und Aushärtens des Matrixwerkstoffs verbindet dieser sich mit den Fasern endgültig zu einem Faserverbundwerkstoff.

Der konkret verwendete Matrixwerkstoff und das konkrete Faserablageverfahren können mit dem Anwendungsgebiet variieren.

Bei der bevorzugten Benutzung eines konturierten Kerns erfolgt eine Anpassung des Querschnitts schon während des Faserablagevorgangs. Mit einem Kern mit einem abgestuften Querschnittverlauf können Stabilisatoren hergestellt werden, die bereits Querschnittverengungen für die spätere Anbringung von Lasteinleitungselementen aufweisen. Das Flechten bzw. Wickeln von abgeflachten oder zapfenförmigen Endstücken zur Anbindung an die Radaufhängung ist bei entsprechend geformtem Kern ebenfalls schon beim Faserablagevorgang realisierbar.

Sind die Anbindungs- bzw. Lasteinleitungselemente als separate Bauteile ausgeführt, besteht die Möglichkeit schon während des Faserablagevorgangs Schnittstellen zur Anfügung dieser Elemente an den Stabilisator stoff- und/oder formschlüssig in denselben einzufügen. Dazu können bspw. Buchsen oder metallische Lagerschalen während des Faserablagevorgangs in den Stabilisator eingeflochten werden um an diesen später die Lasteinleitungs- bzw. Anbindungselemente anzubringen.

Möglichkeiten zur Ausformung von Lasteinleitungselementen, Anbindungselementen an die Radaufhängung oder Schnittstellen zur Anfügung separater Bauteile gibt es auch während des Umformprozesses zwischen dem Faserablagevorgang des Vorformlings und der endgültigen Konturierung in dem geschlossenen Ur-/Umformwerkzeug. Bei der Umformung des Kerns kommt es auch zu einer Umformung des darauf befindlichen Vorformlings. Solange die Umformung des Kerns ohne Kompression oder Verdrängung des Kernmaterials stattfindet, kann die Position der Fasern erhalten bleiben. Die Ausformung abgeflachter Endstücke aus einem Kern mit vormals kreisrundem Querschnitt mit geeignetem Werkzeug ist daher besonders bevorzugt.

Bei der endgültigen Konturierung in dem geschlossenen Ur-/Umformwerkzeug erfolgt die endgültige Ausformung der Querschnittform des Stabilisators. Darüber hinaus werden in das Ur-/Umformwerkzeug eingefügte separate Bauteile während dem Ur-/Umformprozess, insbesondere bei der Aushärtung des Matrixwerkstoffs, ebenfalls stoff- und/oder formschlüssig in den Faserverbundwerkstoff integriert. Besonders bevorzugt ist daher die stoff- und/oder formschlüssige Integration separater Lasteinleitungs- bzw. Anbindungselemente in den Faserverbundwerkstoff, während der endgültigen Konturierung des Stabilisators.

Beispielsweise kann eine stoff- und/oder formschlüssige Verbindung von Stabilisator und Lasteinleitungselementen, die den Stabilisator, insbesondere an Querschnittverengungen umfassen, während der endgültigen Konturierung in dem geschlossenen Ur-/Umformwerkzeug erfolgen. Dazu werden die Lasteinleitungselemente ebenfalls in das Ur-/Umformwerkzeug eingelegt und zwar derart, dass sich der, unter dem Druck des expandierenden Kernmaterial ausdehnende, Vorformling von innen an diese anlegt und durch die Zugabe des Matrixwerkstoffs stoffschlüssig mit diesen verbindet.

Sowohl bei dem Umformprozess als auch bei der endgültigen Konturierung des Vorformlings bzw. Stabilisators kommt es zu einem Umorientieren der Fasern im Vergleich zu den ursprünglich abgelegten Faserlagen um den Kern. Bevorzugt ist daher eine Ausführungsform des erfindungsgemäßen Verfahrens, wobei die Faserlagen derart abgelegt werden, dass sich die gewünschte belastungsangepasste Faserorientierung erst nach der Gesamtheit der Umformprozesse ergibt.

Dies gilt insbesondere für solche Bereiche, die während des ersten Umformschritts des Vorformlings eine Biegung erfahren. Der bei einer Biegung auftretenden Stauchung einer Seite des Stabilisators, bei gleichzeitiger Streckung der anderen, kann somit bspw. durch eine geeignete Faserablage während des Faserablagevorgangs so entgegengewirkt werden, dass beide Seiten am Ende aller Umformprozesse einen nahezu identischen Faserverlauf aufweisen.

Weiterhin Gegenstand der Erfindung ist die Verwendung eines erfindungsgemäßen Stabilisators in Faserverbundbauweise als Stabilenker.

Bei Stabilenkern handelt es sich um Bauteile, die sowohl der Achsführung als auch der Wankstabilisierung des Fahrzeuges dienen. Somit sind in Stabilenkern die Funktionen der Längslenker und des Stabilisators miteinander vereint. Durch die Verwendung von Stabilenkern kann weiterhin auf Anbauteile wie Stützböcke, Pendelstützen und Lager verzichtet werden. Vorteilhaft kann durch einen erfindungsgemäßen Stabilenker somit erheblich Gewicht eingespart und damit der Kraftstoffverbrauch reduziert werden.

Ebenfalls Gegenstand der Erfindung ist die Verwendung eines erfindungsgemäßen Stabilisators in einer dem Fahrwerk nachgeschalteten Federungsstufe. Besonders bevorzugt ist die Verwendung in der Fahrerhausabfederung zur Reduzierung der auftretenden Wankwinkel. Der Querschnitt dieser sogenannten Kabinen- oder Fahrerhausstabilisator ist dabei den zu erwartenden Belastungen angepasst.

Weiterhin ist die Verwendung eines erfindungsgemäßen Stabilisators in Faserverbundbauweise in Fahrwerken von Schienenfahrzeugen bevorzugt. Dabei erfüllt der Stabilisator ebenfalls der Reduzierung des Wankwinkels, der insbesondere in Kurvenfahrten, bei Seitenwind oder bei Gleisniveaudifferenzen ansteigt

Nachfolgend werden mögliche Ausführungsformen des erfindungsgemäßen Stabilisators anhand von Abbildungen näher erläutert.

Dabei zeigen:
- Fig.1:: Seitenansicht eines C-förmigen Stabilisators aus faserverstärktem Kunststoff,
- Fig.2:: Draufsicht eines C-förmigen Stabilisators aus faserverstärktem Kunststoff,
- Fig.3:: Schnittdarstellung eines C-förmigen Stabilisators entlang der Schnittlinie A-A in Figur 1,
- Fig.4:: Querschnittsformen eines C-förmigen Stabilisators an den Schnittflächen aus Figur 2 und
- Fig.5:: Seitenansicht und Schnittdarstellung eines Anbindungselements an die Radaufhängung.

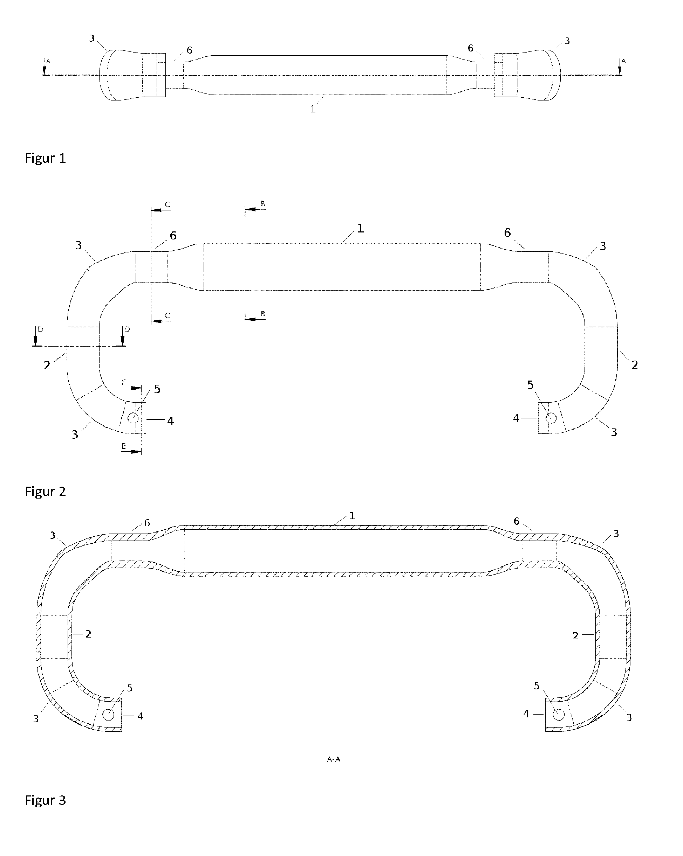

Fig.1 zeigt die Seitenansicht eines C-förmigen Stabilisators in Verbundbauweise aus faserverstärktem Kunststoff. Der Mittelteil 1 des Stabilisators weist eine an die, hauptsächlich zu erwartenden, Torsionsbeanspruchungen des Mittelteils 1 belastungsangepasste Querschnittgeometrie auf. Dazu weist der Mittelteil 1 insbesondere eine kreisrunde Querschnittform mit einem Durchmesser von 90 mm und einer den zu erwartenden Belastungen angepassten Wandstärke von 7 mm auf. An den hauptsächlich torsionsbeanspruchten Mittelteil 1 des Stabilisators schließen sich beidseitig gebogene Übergangsbereich 3 an. Jeweils vor dem Übergang des Mittelteils 1 in den gebogenen Übergangsbereich 3 weist der Mittelteil 1 Querschnittverengungen 6 auf. Zwischen Mittelteil 1 und Querschnittverengungen 6 findet ein Übergang statt, wobei der Durchmesser des Stabilisators gleichmäßig abnimmt. Die Querschnittverengungen 6 dienen der späteren Anbringung von Lasteinleitungselementen, bspw. Aufhängemittel zur Befestigung des Stabilisators am Fahrzeug. Der Mittelteil 1 weist an den Stellen der Querschnittverengungen 6 eine der, insbesondere durch die Lasteinleitungsmittel, zu erwartenden Krafteinleitung angepasste Querschnittform auf. An den Stellen der Querschnittverengungen 6 weist der Mittelteil 1 insbesondere erhöhte Wandstärke von 12 mm auf. Die gebogenen Übergangsbereiche 3 des Stabilisators weisen ebenfalls eine belastungsangepasste Querschnittgeometrie auf. Im Vergleich zum Mittelteil 1 weisen die gebogenen Übergangsbereiche insbesondere keine durchgängig rotationssymmetrische Querschnittform auf. Zusätzlich weicht die Faserorientierung der gebogenen Übergangsbereiche von der Faserausrichtung des Mittelteils 1, 45° relativ zur Längsachse des Stabilisators, ab.

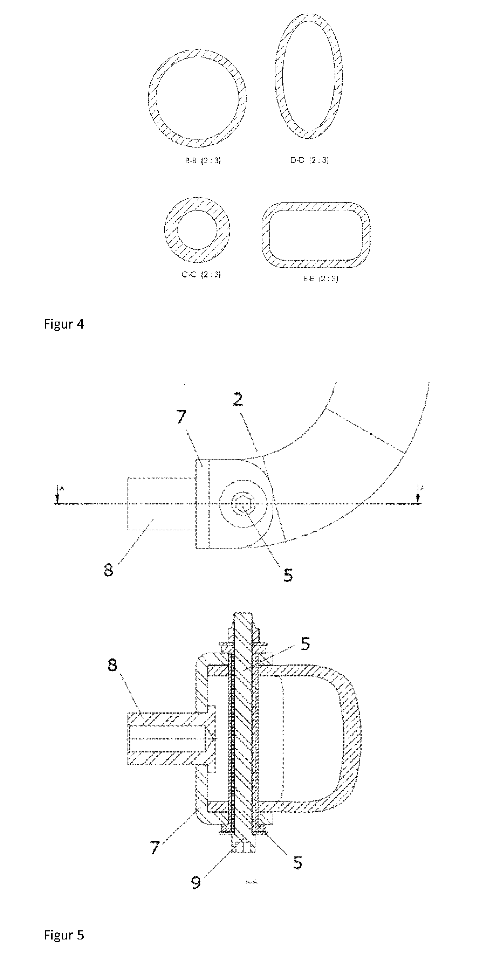

Fig.2 zeigt die Draufsicht des C-förmigen Stabilisators in Verbundbauweise aus faserverstärktem Kunststoff. In dieser Ansicht sind auch die abgewinkelten Endstücke 2 des Stabilisators sowie die an den Enden des Stabilisators vorhandenen Anbringungselemente an die Radaufhängung 4 zu sehen. Weiterhin ist erkennbar, dass bei einem C-förmigen Stabilisator insgesamt vier gebogene Übergangsbereiche 3, insbesondere auch zwischen den abgewinkelten Endstücken 2 und den Anbringungselementen an die Radaufhängung 4, vorhanden sind. Der abgebildete Stabilisator weist ebenfalls Querschnittverengungen an den äußeren Enden des Mittelteils 1, vor dessen Übergang in die gebogenen Übergangsbereiche 3, auf. An den Querschnittverengungen 6 weist der Mittelteil 1 gegenüber seiner sonstigen Querschnittgeometrie (Schnittlinie B-B, vgl. Fig. 4) eine Verkleinerung des Durchmessers der Querschnittfläche auf 60 mm sowie eine erhöhte Wandstärke von 12 mm auf (Schnittlinie C-C, vgl. Fig. 4). Dies dient der Anpassung des Stabilisators an die erhöhte Kraft- bzw. Lasteinleitung durch später an den Stellen der Querschnittverengung 6 angebrachte Lasteinleitungselemente. An den hauptsächlich biegebeanspruchten abgewinkelten Endstücken 2 weist der Stabilisator eine an die Biegebeanspruchung angepasste, insbesondere nicht rotationssymmetrische, Querschnittform auf. Die ovale Querschnittform der abgewinkelten Endstücke 2 mit einer Wandstärke von 7mm, einer kleinen Halbachse von 31 mm sowie einer großen Halbachse von 57,5 mm (Schnittlinie D-D, vgl. Fig. 4) ist, aufgrund der zu der Richtung der zu erwartenden Biegebeanspruchung parallelen großen Halbachse des die Querschnittsfläche bildenden Ovals, an die zu erwartende Biegebeanspruchung angepasst. Die Faserorientierung in dem Faserkunststoffverbund der abgewinkelten Endstücke 2 beträgt 30° relativ zur Längsachse des Stabilisators. An den Enden des Stabilisators befinden sich die Anbindungselemente an die Radaufhängung 4. Diese sind in Form einer Abflachung und Querbohrung in Verbindung mit einem Bolzenloch 5 ausgeführt. Die Querschnittsform der Anbindung an die Radaufhängung 4 (Schnittlinie E-E, vgl. Fig.4) ist an diese Funktion, insbesondere der festen Fixierung eines Bolzens im Bolzenloch 5 mittels Schraubverbindungen, angepasst. Dazu weist die Querschnittsform jeweils parallele gegenüberliegende Seiten auf. Die Wandstärke des Stabilisators an den Anbindungselementen an die Radaufhängung beträgt 7 mm, die Ausdehnung an den Schmalseiten beträgt 60 mm und an den Seiten rechtwinklig zu diesen 100 mm.

Fig.3 zeigt die Schnittdarstellung des C-förmigen Stabilisators in Verbundbauweise aus Faserkunststoffverbund entlang der Schnittlinie A-A (Fig.1). Die Darstellung zeigt den variierenden, belastungsangepassten Wandstärkenverlauf des erfindungsgemäßen Stabilisators. Die Wandstärke im Mittelteil 1 des Stabilisators beträgt 7 mm und an den Querschnittverengungen 6 12 mm. Am Übergang von Mittelteil 1 zu Querschnittsverengungen 6 nimmt der Durchmesser des Stabilisators gleichmäßig von 90 mm auf 60 mm bei gleichzeitig gleichmäßig ansteigender Wandstärke ab. In den gebogenen Übergangsbereichen 3 zwischen Querschnittverengungen 6 und abgewinkelten Endstücken 2 erfolgt eine Abnahme der Wandstärke von 12 mm auf 7 mm in den abgewinkelten Endstücken 2. Der Durchmesser des Stabilisators variiert in den gebogenen Übergangsbereichen 3 zwischen Querschnittverengung 6 und abgewinkelten Endstücken 2 aufgrund des Übergangs von kreisförmiger (Schnittlinie C-C, vgl. Fig. 4) zu ovaler Querschnittform (Schnittlinie D-D, vgl. Fig. 4). In den gebogenen Übergangsbereichen 3 zwischen abgewinkelten Endstücken 2 und Anbindungselementen an die Radaufhängung 4 bleibt die Wandstärke des Stabilisators konstant und beträgt somit an den Anbindungselementen an die Radaufhängung 4 7 mm. Gleichzeitig findet ein Übergang von ovaler Querschnittform (Schnittlinie DD, vgl. Fig.4) zu annähernd rechteckiger Querschnittform mit abgerundeten Ecken (Schnittlinie E-E, vgl. Fig.4) statt.

Fig. 4 zeigt die Querschnittflächen des Stabilisators an den in Fig.1 dargestellten Schnittlinien B-B, C-C, D-D und E-E. Die Schnittlinie B-B durchschneidet den Stabilisator im Mittelteil 1, der eine kreisrunde Querschnittform mit einer Wandstärke von 7 mm und einem Außendurchmesser von 90 mm aufweist. Die Schnittlinie C-C durchschneidet den Stabilisator an den Querschnittverengungen 6, die eine kreisrunde Querschnittform mit einer Wandstärke von 12 mm und einem Außendurchmesser von 60 mm aufweisen. Die Schnittlinie D-D durchschneidet den Stabilisator an den abgewinkelten Endstücken 2, die eine ovale Querschnittform mit einer Wandstärke von 7 mm, einer kleinen Halbachse von 31 mm und einer großen Halbachse von 57,5 mm aufweisen. Die Schnittlinie E-E durchschneidet den Stabilisator an den Anbindungselementen an die Radaufhängung 4, die eine annähernd rechteckige Querschnittform mit abgerundeten Ecken und einer Wandstärke von 7 mm sowie paarweise parallel gegenüberliegende Seiten von 100 mm und 60 mm Länge aufweisen.

Fig.5 zeigt die Seitenansicht des abgewinkelten Endstücks eines C-förmigen Stabilisators mit einem Anbindungselement an die Radaufhängung sowie eine Schnittdarstellung entlang der in der Seitenansicht eingezeichneten Schnittlinie A-A. Die Anbindung an die Radaufhängung 4 ist bei C-förmigen Stabilisatoren bevorzugt zapfenförmig ausgebildet. Dabei können die Zapfen ohne Faserunterbrechung aus dem Faserverbundmaterial selbst oder als separates Bauteil ausgebildet sein. In Fig.5 ist die formschlüssige Befestigung eines separaten zapfenförmigen Anbindungselements an die Radaufhängung 4 in einer Seitenansicht und einer Schnittdarstellung abgebildet. Die abgewinkelten Endstücke 2 eines erfindungsgemäßen Stabilisators weisen dabei eine kreisrunde Querschnittform mit einem Außendurchmesser von 60 mm und einer Wandstärke von 7 mm auf. An den Enden der abgewinkelten Endstücke 2 ist eine Schnittstelle zur formschlüssigen Anbindung eines separaten Anbindungselements an die Radaufhängung 4 in Form eines Bolzenlochs 5 vorgesehen. Auf die Enden der abgewinkelten Endstücke 2 sind Hülsen 7 so aufgeschoben, dass in den Hülsen 7 befindliche Aussparrungen deckungsgleich mit dem Bolzenloch 5 in den abgewinkelten Endstücken 2 sind. Die Hülsen 7 können dabei die Enden der abgewinkelten Endstücke 2 vollständig ummanteln, also selbst eine kreisrunde Querschnittform mit einem Innendurchmesser von 60 mm aufweisen. In die Hülsen 7 integriert, ist ein Zapfen 8 der der eigentlichen Anbindung an die Radaufhängung dient. Der Zapfen 8 ist form- und/oder stoffschlüssig in die Hülse 7 integriert. Zur Befestigung des separaten Anbindungselements an die Radaufhängung 4, bestehend aus Hülse 7 und Zapfen 8, wird durch einen Bolzen oder eine Schraube 9 durch die Aussparung der Hülse 7 sowie durch das Bolzenloch 5 geführt und fixiert um somit die Hülse 7 mit dem abgewinkelten Endstück 2 formschlüssig zu verbinden.

### Bezugszeichenliste

- 1: Mittelteil
- 2: abgewinkeltes Endstück
- 3: gebogener Übergangsbereich
- 4: Anbindung an die Radaufhängung
- 5: Bolzenloch
- 6: Querschnittverengung
- 7: Hülse
- 8: Zapfen
- 9: Bolzen

## Patentansprüche

1. Stabilisator oder Stabilenker in Faserverbundbauweise, mit einteiligem Aufbau ohne Faserunterbrechung, wobei die Querschnittgeometrie, die Wandstärke sowie der Faserverlauf in axialer und radialer Richtung derart variieren, dass die aus dem zur Verfügung stehenden Bauraum und den zu erwartenden Belastungen resultierenden Anforderungen erfüllt sind und der Faserverlauf axial und radial belastungsgerecht eingestellt wird, **dadurch gekennzeichnet, daß** der hauptsächlich torsionsbeanspruchte Mittelteil (1) mit zwischen +/- 35° und +/- 55 zur Längsachse orientierten Fasern und die hauptsächlich biegebeanspruchte Endstücke (2) mit zwischen +/- 20° und +/- 40 zur Längsachse orientierten Fasern verstärkt werden und in den Übergangsbereichen (3) Übergange zwischen diesen Faserorientierungen relativ zur Längsachse stattfinden.

2. Stabilisator oder Stabilenker nach Anspruch 1, **dadurch gekennzeichnet, dass** der hauptsächlich torsionsbeanspruchte Mittelteil (1) des Stabilisators einen weitestgehend kreisförmigen Querschnitt mit in axialer Richtung variierendem, der Belastung sowie der Position von Lasteinleitungselementen angepassten Durchmesser und Wandstärkenverlauf aufweist, die hauptsächlich biegebeanspruchten Endstücke (2) des Stabilisators eine der Biegebelastung sowie der Anbindung der Radaufhängung (4) und die Übergangsbereiche eine der kombinierten Torsions- und Biegebelastung angepasste Querschnittform und Wandstärke aufweisen.

3. Stabilisator oder Stabilenker nach einem der Ansprüche 1 oder 2, **dadurch gekennzeichnet, dass** zur Anpassung der Wandstärke an definierten Belastungsbereichen und/oder in Biegebereichen und/oder an Lasteinleitungselementen textile Einleger eingebracht sind und/oder die Faserablage verstärkt oder vermindert ist.

4. Stabilisator oder Stabilenker nach einem der Ansprüche 1 bis 3, **dadurch gekennzeichnet, dass** Lasteinleitungs- und/oder Anbindungselemente an die Radaufhängung (4) aus Faserverbundwerkstoff ausgebildet und ohne Faserunterbrechung ausgeformt sind.

5. Stabilisator oder Stabilenker nach einem der Ansprüche 1 bis 4, **dadurch gekennzeichnet, dass** Lasteinleitungs- und/oder Anbindungselemente an die Radaufhängung (4) in Form von metallischen Lagerelemente und/oder Buchsen stoff- und/ oder formschlüssig in den Faserverbundwerkstoff eingefügt sind.

6. Verfahren zur Herstellung eines Stabilisators oder Stabilenker nach einem der Ansprüche 1 bis 5, umfassend folgende Schritte:
a) auf einem geraden, elastischen sowie konturierten Kern durch die Ablage von Fasern ein Vorformling (Preform) erzeugt wird,
b) dieser gemeinsam mit dem Kern in eine gebogene Geometrie umgeformt wird,
c) in ein der gebogenen Geometrie entsprechend geformtes, geschlossenes Ur-/Umformwerkzeug eingelegt wird,
d) in diesem die Fasern mit einem Matrixwerkstoff zu Laminat verbunden werden,
e) dieses durch Einfüllung eines expandierenden Materials in den Kern in seine Endkontur verpresst wird
f) und anschließend aus dem Ur-/Umformwerkzeug entnommen wird.

7. Verfahren nach Anspruch 6, **dadurch gekennzeichnet, dass**, den Fasern ein duroplastischer Matrixwerkstoff in flüssigem Zustand durch einen Infiltrationsprozess im geschlossenen Umformwerkzeug zugeführt wird oder ein fester thermoplatischer Matrixwerkstoff in Form von Fäden beim Faserablagevorgang in die Faserlagen integriert wird.

8. Verfahren nach Anspruch 6 oder 7, **dadurch gekennzeichnet, dass** als Vorformling in Schritt a) oder als Laminat in Schritt e), die Lasteinleitungselemente und/oder die Anbindungselemente an die Radaufhängung (4) und/oder die Schnittstellen zur Anfügung
separater Lasteinleitungselemente und/oder Anbindungselemente an die Radaufhängung ausgeformt, sowie metallische Lagerelemente und/ oder Rückenlager in den Faserverbundwerkstoff stoff- und/ oder formschlüssig integriert werden.

9. Verfahren nach einem der Ansprüche 6 bis 8, **dadurch gekennzeichnet, dass** die Ablage der Fasern auf dem Kern nach Schritt a) in einem Endlosprozess derart erfolgt, dass sich die gewünschte Faserorientierung erst am Ende des Umformvorgangs einstellt.

10. Verwendung eines Stabilisators nach einem der Ansprüche 1 bis 5 in Fahrerhausabfederungen und Fahrwerken von Schienenfahrzeugen.

## Claims

1. Stabilizer bar or stabilizer link in fiber composite construction, with monolithic construction without fiber interruption, wherein the cross section geometry, the wall thickness and the fiber orientation vary in axial direction and in radial direction such that requirements defined by available construction space and expected loads acting on the stabilizer bar or stabilizer link are fulfilled and the fiber orientation is adjusted axially and radially load-appropriately, **characterized in that** the stabilizer bar or stabilizer link has a middle section (1) that is primarily torsion-loaded and is reinforced with fibers having a first fiber orientation between +/-35° and +/-55° relative to the longitudinal axis and the stabilizer bar or stabilizer link has end members that are primarily bending-loaded and are reinforced with fibers having a second fiber orientation between +/-20° and +/ - 40° relative to the longitudinal axis, wherein the stabilizer bar or stabilizer link has transitional areas between the middle section and the end members (2) and in the transitional areas there are transitions between the first and second fiber orientations relatively to the longitudinal axis.

2. Stabilizer bar or stabilizer link according to claim 1, wherein the middle section (1) has a circular cross section with a diameter and a wall thickness course wherein the diameter and the wall thickness vary in axial direction of the middle section (1) and are adapted to the load acting on the middle section (1) as well as the position of load introduction elements provided on the middle section, wherein the end members that are primarily bending-loaded have a cross sectional shape and a wall thickness that are adapted to the bending load as well as the connection for the wheel suspension (4), and the transitional areas have a cross-sectional shape and a wall thickness that are adapted to the combined torsion and bending load.

3. Stabilizer bar or stabilizer link according to claim 1 or 2, further comprising textile inserts that, for adapting the wall thickness, are introduced at defined load areas and/or at bending areas and/or at load introduction elements.

4. Stabilizer bar or stabilizer link according to of the claims 1 to 3, wherein load introduction and/or connecting elements for the wheel suspension (4) are embodied from fiber composite material and are formed without fiber interruption.

5. Stabilizer bar or stabilizer link according to one of the claims 1 to 4, wherein load introduction and/or connecting elements for the wheel suspension are introduced in the form of metallic bearing elements and/or bushings into the fiber composite material by material fusing and/or by form fit.

6. Method for manufacturing a stabilizer bar or stabilizer link according to one of the claims 1 to 5, comprising:
a) generating a preformed blank by applying fibers on a straight, elastic and contoured core,
b) forming the preformed blank together with the core to a bent geometry,
c) inserting the preformed blank with bent geometry of step b) into a closed original mold/forming tool shaped in accordance with the bent geometry,
d) joining the fibers with a matrix material to a laminate,
e) compressing the laminate by filling in an expanding material into the core to a final contour
f) and afterwards removing the compressed laminate from the original mold/forming tool.

7. Method according to claim 6, further comprising the step of supplying to the fibers a thermosetting matrix material in liquid state by an infiltration process in the closed original mold/forming tool.

8. Method according to claim 6 or 7, wherein as a preformed blank in step a) or as a laminate in step e), the load introduction elements and/or the connecting elements for the wheel suspension (4) and/or the interfaces for the attachment of separate load introduction elements and/or connecting elements for the wheel suspension are formed, as well as metallic bearing elements and/or back bearings are integrated into the fiber composite material by material fusing and/or by form fit.

9. Method according to one of the claims 6 to 8, wherein the application of the fibers on the core according to step a) in an endless process is done such that the desired fiber orientation is adjusted only at the end of the forming process.

10. The use of a stabilizer bar according to one of the claims 1 to 5 in the form of driver's cab suspensions and chassis of rail vehicles.

## Revendications

1. Stabilisateur ou biellette de stabilisation à structure composite renforcée par des fibres et à organisation structurelle monobloc sans discontinuité de fibres, sachant que la géométrie de section transversale, l'épaisseur de paroi, ainsi que le tracé des fibres dans les directions axiale et radiale, varient de manière qu'il soit satisfait aux exigences résultant de l'espace d'installation disponible et des contraintes prévisibles, et que ledit tracé des fibres soit ajusté axialement et radialement en tenant compte desdites contraintes, caractérisé(e) par le fait que la partie centrale (1), majoritairement sollicitée à la torsion, est renforcée par des fibres dont l'orientation se situe entre +/- 35° et +/- 55° par rapport à l'axe longitudinal et que les régions extrêmes (2), majoritairement sollicitées à la flexion, sont renforcées par des fibres dont l'orientation se situe entre +/- 20° et +/- 40° par rapport audit axe longitudinal, les zones de transition (3) étant le siège de transitions entre ces orientations des fibres par rapport à l'axe longitudinal.

2. Stabilisateur ou biellette de stabilisation selon la revendication 1, caractérisé(e) par le fait que la partie centrale (1) dudit stabilisateur, majoritairement sollicitée à la torsion, présente une section transversale très largement circulaire offrant un diamètre et un profil d'épaisseur de paroi qui varient dans le sens axial et sont adaptés à la contrainte, ainsi qu'à l'emplacement d'éléments d'introduction de charges, les régions extrêmes (2) dudit stabilisateur, majoritairement sollicitées à la flexion, et les zones de transition, étant pourvues d'une configuration de section transversale et d'une épaisseur de paroi qui sont adaptées, respectivement, à la contrainte de flexion, ainsi qu'au rattachement de la suspension (4) des roues, et à la contrainte de torsion et de flexion conjuguées.

3. Stabilisateur ou biellette de stabilisation selon l'une des revendications 1 ou 2, caractérisé(e) par le fait que, pour adapter l'épaisseur de paroi, des inserts textiles sont incorporés au niveau de zones de contraintes bien définies et/ou dans des zones de flexion et/ou au niveau d'éléments d'introduction de charges, et/ou le dépôt de fibres est amplifié ou diminué.

4. Stabilisateur ou biellette de stabilisation selon l'une des revendications 1 à 3, caractérisé(e) par le fait que des éléments d'introduction de charges, et/ou des éléments de rattachement à la suspension (4) des roues, sont réalisés en un matériau composite fibreux et sont façonnés sans discontinuité de fibres.

5. Stabilisateur ou biellette de stabilisation selon l'une des revendications 1 à 4, caractérisé(e) par le fait que des éléments d'introduction de charges, et/ou des éléments de rattachement à la suspension (4) des roues, sont incorporés dans le matériau composite fibreux par solidarisation matérielle et/ou par conformation, sous la forme d'éléments métalliques de montage et/ou de douilles.

6. Procédé de fabrication d'un stabilisateur ou d'une biellette de stabilisation conforme à l'une des revendications 1 à 5, incluant les étapes suivantes :
a) une ébauche (préforme) est produite, par le dépôt de fibres, sur un noyau rectiligne élastique et profilé,
b) ladite ébauche est déformée jusqu'à une configuration géométrique courbe, conjointement audit noyau,
c) et insérée dans un outil fermé de mise en forme initiale/déformation, dont le profilage correspond à ladite configuration géométrique courbe,
d) les fibres sont alliées à un matériau de matrice, dans ledit outil, afin d'obtenir un stratifié,
e) ledit stratifié est comprimé jusqu'à son profil défmitif par déversement d'un matériau expansif dans ledit noyau,
f) et est ensuite enlevé dudit outil de mise en forme initiale /déformation.

7. Procédé selon la revendication 6, **caractérisé par le fait qu'**un matériau de matrice thermodurcissable à l'état fluide est adjoint aux fibres par un processus d'infiltration, dans le moule fermé de mise en forme initiale, ou bien un matériau de matrice thermoplastique solide, revêtant la forme de fils, est intégré dans les couches fibreuses au cours de l'opération de dépôt des fibres.

8. Procédé selon la revendication 6 ou 7, **caractérisé par le fait que** les éléments d'introduction de charges et/ou les éléments de rattachement à la suspension (4) des roues, et/ou les zones d'interface dévolues à l'ajout d'éléments distincts d'introduction de charges et/ou d'éléments distincts de rattachement à ladite suspension des roues, sont façonné(e)s en tant qu'ébauche conforme à l'étape a) ou en tant que stratifié conforme à l'étape e), de même que des éléments de montage et/ou des écuelles d'arrêt métalliques sont intégré(e)s dans le matériau composite fibreux, par solidarisation matérielle et/ou par conformation.

9. Procédé selon l'une des revendications 6 à 8, **caractérisé par le fait que** le dépôt des fibres sur le noyau, conforme à l'étape a), s'opère en un processus continu, de façon telle que l'orientation souhaitée des fibres s'instaure uniquement à l'achèvement de l'opération de déformation.

10. Utilisation d'un stabilisateur conforme à l'une des revendications 1 à 5, dans des suspensions de cabines de conducteurs et dans des trains de roulement de véhicules ferroviaires.
